# FASCICULE DE BREVET EUROPEEN

(11) **EP 3 292 438 B1**
(45) Date de publication et mention de la délivrance du brevet: **25.10.2023**
(21) Numéro de dépôt: 16722129.0
(22) Date de dépôt: 04.05.2016
(51) Int. Cl.: G02F 1/355

(54) **PROCEDE D'INSCRIPTION DE PROPRIETES OPTIQUES NON-LINEAIRES DU SECOND ORDRE DANS UN MATERIAU VITREUX OU AMORPHE**
VERFAHREN ZUR BESCHRIFTUNG VON NICHTLINEAREN OPTISCHEN EIGENSCHAFTEN ZWEITER ORDNUNG IN EIN AMORPHES ODER GLASARTIGES MATERIAL
METHOD FOR THE INSCRIPTION OF SECOND-ORDER NONLINEAR OPTICAL PROPERTIES INTO AN AMORPHOUS OR VITREOUS MATERIAL

(30) Priorité: 05.05.2015 FR 1554015
(43) Date de publication de la demande: 14.03.2018
(73) Titulaire: Université de Bordeaux, 33000 Bordeaux (FR); Institut Polytechnique de Bordeaux 1, 33402 Talence Cedex (FR); Centre National de la Recherche Scientifique CNRS, 75794 Paris Cedex 16 (FR)
(72) Inventeur: DUSSAUZE, Marc Gaston Joseph Henri, 33600 Pessac (FR); FARGIN, Evelyne Claude, 33170 Gradignan (FR); RODRIGUEZ, Vincent Jean Paul, 33610 Cestas (FR); CARDINAL, Thierry, 33770 Salles (FR); ADAMIETZ, Frédéric Robert, 33700 Mérignac (FR)
(74) Mandataire: Cabinet Camus Lebkiri
(86) Numéro de dépôt international: PCT/EP2016/060071
(87) Numéro de publication internationale: WO 2016/177818

(56) Documents cités:
- WO-A1-90/08970
- US-A- 5 434 699
- DELESTRE AURELIEN ET AL: "Towards second-harmonic generation micropatterning of glass surface", APPLIED PHYSICS LETTERS, AMERICAN INSTITUTE OF PHYSICS, 2 HUNTINGTON QUADRANGLE, MELVILLE, NY 11747, vol. 96, no. 9, 3 mars 2010 (2010-03-03), pages 91908-91908, XP012132388, ISSN: 0003-6951, DOI: 10.1063/1.3350895
- W Margulis ET AL: "Who needs a cathode? Creating a second-order nonlinearity by charging glass fiber with two anodes References and links", OPTICS EXPRESS, 18 août 2009 (2009-08-18), pages 15534-15540, XP055253261, Extrait de l'Internet: URL:https://www.osapublishing.org/DirectPD FAccess/FAD35EDE-FF38-9A81-740C23205D17423 8_184861/oe-17-18-15534.pdf?da=1&id=184861 &seq=0&mobile=no [extrait le 2016-02-25]
- BRUNKOV P N ET AL: "Submicron-Resolved Relief Formation in Poled Glasses and Glass-Metal Nanocomposites", TECHNICAL PHYSICS LETTERS, AMERICAN INSTITUTE OF PHYSICS. NEW YORK, US, vol. 34, no. 12, 1 décembre 2008 (2008-12-01), pages 1030-1033, XP002718946, ISSN: 1063-7850, DOI: 10.1134/S1063785008120122
- Hideki Takagi ET AL: "Electrostatic Imprint Process for Glass", Applied Physics Express, 1 février 2008 (2008-02-01), page 24003, XP55287120, DOI: 10.1143/APEX.1.024003 Extrait de l'Internet: URL:doi:10.1143/APEX.1.024003
- Tatiana Cremoux ET AL: "Trapped Molecular and Ionic Species in Poled Borosilicate Glasses: Toward a Rationalized Description of Thermal Poling in Glasses", JOURNAL OF PHYSICAL CHEMISTRY C, vol. 118, no. 7, 20 February 2014 (2014-02-20), pages 3716-3723, XP055308902, US ISSN: 1932-7447, DOI: 10.1021/jp4101015
- FACCIO D ET AL: "Dynamics of the second-order nonlinearity in thermally poled silica glass", APPLIED PHYSICS LETTERS, A I P PUBLISHING LLC, US, vol. 79, no. 17, 22 October 2001 (2001-10-22), pages 2687-2689, XP012029187, ISSN: 0003-6951, DOI: 10.1063/1.1394948
- PRUNERI V ET AL: "High second-order optical nonlinearities in thermally poled sol-gel silica", APPLIED PHYSICS LETTERS, A I P PUBLISHING LLC, US, vol. 74, no. 18, 3 May 1999 (1999-05-03), pages 2578-2580, XP012022523, ISSN: 0003-6951, DOI: 10.1063/1.123903
- PRUNERI V ET AL: "Electric-field thermally poled optical fibers for quasi-phase-matched second-harmonic generation", IEEE PHOTONICS TECHNOLOGY LETTERS, IEEE SERVICE CENTER, PISCATAWAY, NJ, US, vol. 9, no. 2, 1 February 1997 (1997-02-01), pages 185-187, XP011431155, ISSN: 1041-1135, DOI: 10.1109/68.553085
- PRUNERI V ET AL: "Frequency doubling of picosecond pulses in periodically poled D-shape silica fibre", ELECTRONICS LETTERS, IEE STEVENAGE, GB, vol. 33, no. 4, 13 February 1997 (1997-02-13), pages 318-319, XP006007047, ISSN: 0013-5194, DOI: 10.1049/EL:19970177

## Description

### DOMAINE

Le domaine de l'invention concerne les procédés d'inscription de propriétés optiques non-linéaires du second ordre sur un support de type matériau amorphe. Le domaine de l'invention se rapporte aux supports ainsi inscrits et aux électrodes ayant une structuration permettant la production d'effets d'optique non-linéaire sur un matériau amorphe.

### ETAT DE L'ART

Actuellement, il existe des solutions permettant d'inscrire des propriétés optiques non-linéaires sur des cristaux inorganiques, voir par exemple les méthodes utilisées dans Hideki Takagi ET AL: "Electrostatic Imprint Process for Glass",Applied Physics Express, 1 février 2008 (2008-02-01), page 24003, DELESTRE AURELIEN ET AL: "Towards second-harmonie génération micropatterning of glass surface",APPLIED PHYSICS LETTERS, AMERICAN INSTITUTE OF PHYSICS, 2 HUNTINGTON QUADRANGLE, MELVILLE, NY 11747, vol. 96, no. 9, 3 mars 2010 (2010-03-03), pages 91908-91908 ou dans PRUNERI V ET AL: "Frequency doubling of picosecond pulses in periodically poled D-shape silica fibre",ELECTRONICS LETTERS, IEE STEVENAGE, GB, vol. 33, no. 4, 13 février 1997 (1997-02-13), pages 318-319. Parmi ces derniers on trouve des matériaux diélectriques cristallins non centrosymétriques, tels que des oxydes du type niobate de lithium (LiNbO3) ou tantalate de lithium (LiTaO3) ainsi que des matériaux semi-conducteurs comme GaS.

Les principales limites des matériaux cristallins utilisés actuellement concernent la difficulté de mise en oeuvre de ces matériaux ce qui rend les procédés de fabrication coûteux, ainsi que les pertes optiques de ce type de systèmes notamment aux interfaces des matériaux cristallins et des matériaux vitreux comme c'est le cas dans les mises en oeuvre de fibres optiques.

Il n'existe pas de solution permettant d'inscrire des propriétés optiques non-linéaires de manière contrôlée géométriquement et spatialement sur un matériau amorphe formant un support. Or ces derniers matériaux sont susceptibles d'offrir de bonnes capacités pour définir des éléments optiques dans différentes applications comme par exemple la fabrication de composants électro-optiques ou d'éléments permettant de transposer en fréquence un signal optique.

Il existe donc un besoin de définir un nouveau procédé d'inscription de propriétés non-linéaires sur un support amorphe.

### RESUME DE L'INVENTION

L'invention permet de résoudre les inconvénients précités.

Un objet de l'invention concerne un procédé d'inscription de propriétés optiques non-linéaires du second ordre tel que revendiqué dans la revendication 1. Les revendications 2 à 5 définissent d'autres avantages de l'invention.

Un autre objet de l'invention concerne une électrode structurée pour l'inscription de propriétés optiques non-linéaires telle que définie dans la revendication 6. Les revendications 7 à 10 définissent d'autres caractéristiques de l'électrode.

### BREVE DESCRIPTION DES FIGURES

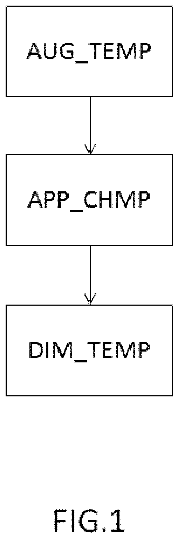

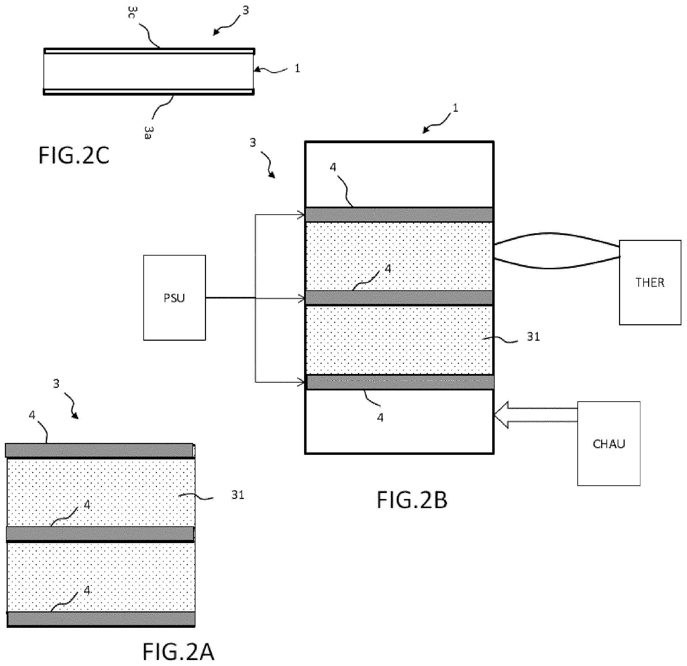

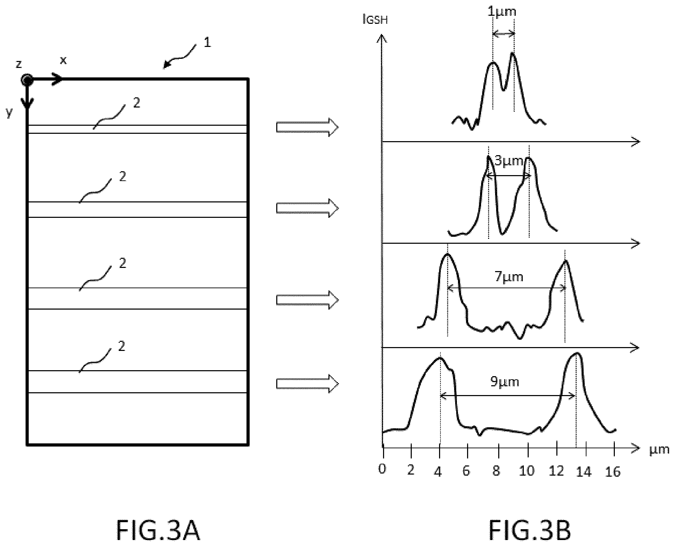

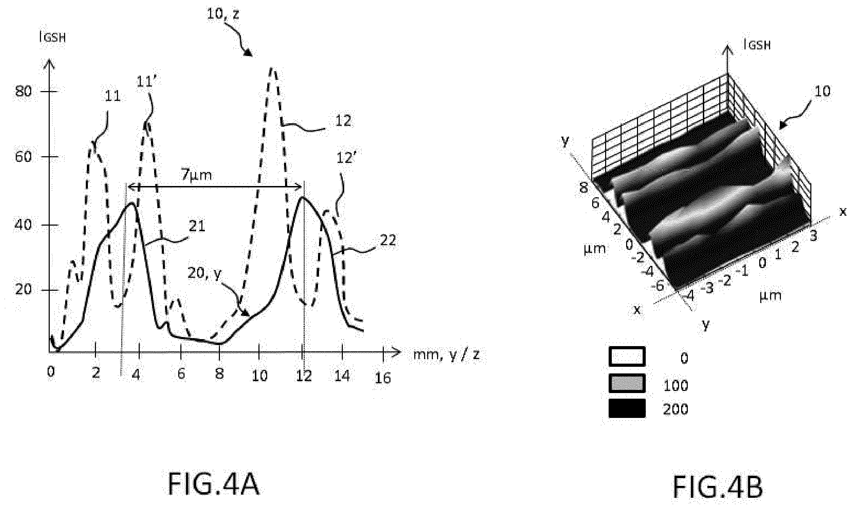

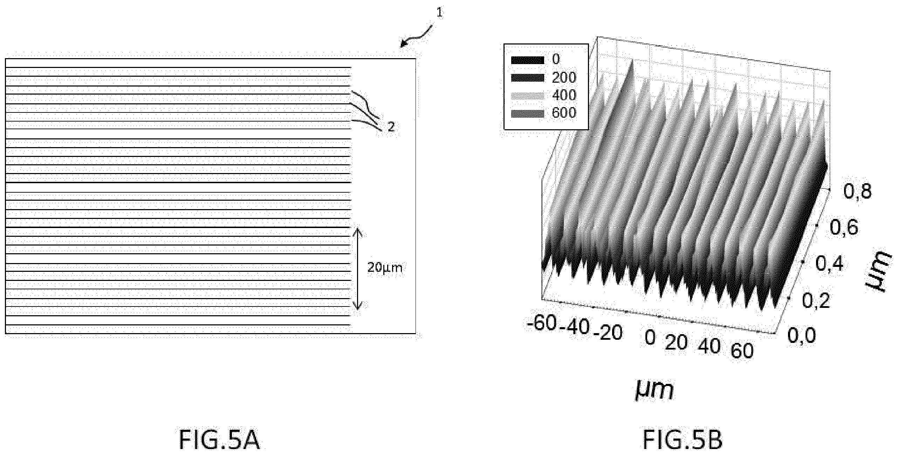

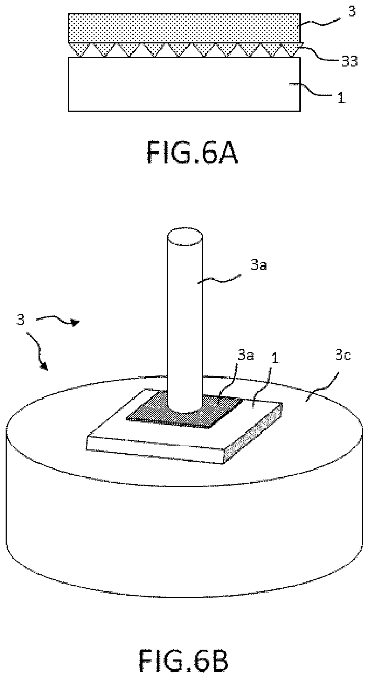

D'autres caractéristiques et avantages de l'invention ressortiront à la lecture de la description détaillée qui suit, en référence aux figures annexées, qui illustrent :
▪ figure 1 : les principales étapes du procédé d'inscription de l'invention ;
▪ figures 2A, 2B, 2C : les principaux éléments pour la mise en oeuvre du procédé d'inscription de l'invention ;
▪ figure 3A : un matériau amorphe formant un support imprimé à partir d'une électrode comprenant des lignes de différentes largeurs ;
▪ figures 3B : différentes réponses d'un signal GSH en fonction de la largeur des lignes de structuration d'un support de la figure 3A ;
▪ figures 4A : une réponse d'un signal GSH vérifiant l'inscription de propriétés optiques non-linéaires du second ordre sur un support en matériau amorphe ;
▪ figures 4B : une représentation tridimensionnelle d'une réponse GSH à un laser polarisé selon une dimension d'un support imprimé à partir du procédé de l'invention ;
▪ figure 5A : une inscription de lignes micrométriques comprenant des propriétés optiques non-linéaires selon le procédé de l'invention ;
▪ figure 5B : une représentation tridimensionnelle d'une réponse GSH à un laser polarisé selon une dimension d'un support imprimé de la figure 5A ;
▪ figures 6A, 6B : deux exemples de réalisation d'électrodes de l'invention.

### DESCRIPTION

On parle indifféremment dans la présente description d'un support en matériau amorphe ou d'un support amorphe ou d'un matériau amorphe formant un support pour l'inscription.

Un objet de l'invention concerne un procédé d'implémentation contrôlée spatialement et/ géométriquement de propriétés optiques non-linéaires du second ordre dans un matériau amorphe formant un support. Ce procédé d'implémentation est également considéré comme un procédé d'inscription ou un procédé d'impression de propriétés optiques non-linéaires du second ordre sur le support.

On nomme une « propriété optique non-linéaire » d'un matériau, une propriété optique du matériau qui génère une réponse non-linéaire à l'application d'un champ électrique E appliqué et donc y compris à un champ d'une onde électromagnétique et donc d'une onde lumineuse. Le matériau comprend une propriété optique non-linéaire lorsque la réponse à un champ E qui est appliqué localement sur la zone comprenant la propriété optique non-linéaire est non proportionnelle à E.

Enfin, dans la présente description, on évoque une inscription à la surface d'un support tout en considérant que l'inscription est effectuée sur une portion de la profondeur du matériau. Etant donné que les dimensions d'inscription en profondeur du matériau sont négligeables vis à vis des dimensions dans le plan parallèle à la surface du support, on parle communément d'inscription à la surface du support. Néanmoins, au niveau micrométrique, l'inscription n'est pas réalisée uniquement en surface mais dans un volume du matériau.

Dans la présente description, on considère une « propriété optique non-linéaire » : une propriété optique non-linéaire du second ordre. Différents ordres de non linéarité peuvent se produire lors d'un procédé d'inscription de l'invention, mais l'invention permet de contrôler notamment géométriquement et spatialement les propriétés optiques non-linéaires du second ordre qui sont induites dans un matériau amorphe.

### Support

Le procédé de l'invention permet de contrôler l'implémentation d'une anisotropie au sein d'un matériau amorphe. L'implémentation de l'anisotropie contrôlée permet, selon le procédé de l'invention, d'induire la création d'au moins une propriété optique non-linéaire du second ordre à la surface du matériau. L'anisotropie est implémentée sur une profondeur allant de 100 nm à quelques dizaines de µm. L'anisotropie est générée par l'implémentation d'une charge d'espace selon une géométrie souhaitée. L'anisotropie créée à la surface du support peut comprendre des propriétés selon un ou différents axes du matériau amorphe.

Les matériaux sont des matériaux amorphes comme par exemple les verres. On parle alors de support vitreux. Plus particulièrement, les matériaux amorphes inorganiques sont particulièrement avantageux. On entend par « matériau inorganique » tout matériau de type minéral. En conséquence, l'invention s'applique à des supports amorphes de type minéral, autrement dit à des matériaux minéraux amorphes.

Selon un mode de réalisation trouvant des applications particulières, les matériaux vitreux de type verre présentent un intérêt lors de l'application du procédé de l'invention.

Le matériau utilisé pour mettre en oeuvre l'invention est d'autant plus intéressant que sa composition comprend des cations contribuant à une conduction ionique. Parmi les cations, il est possible de configurer une composition d'un matériau amorphe avec, par exemple, du Li⁺, Na⁺, K⁺ et/ou Ca²⁺. La proportion atomique de ces éléments dans le matériau amorphe peut varier de quelques ppm à 20%. Selon certains cas, la proportion de cations peut être supérieure allant de 20% à 50%. Cependant, la proportion atomique de cations est configurée dans le matériau amorphe pour permettre :
▪ d'une part, la création de propriétés optiques non-linéaires contrôlées spatialement et géométriquement et ;
▪ d'autre part, une bonne tenue mécanique du matériau pour l'usage souhaité.

Selon un mode de réalisation, le support peut être une lame de verre d'un millimètre d'épaisseur dont la formule chimique comporte les éléments suivants : Na, B, P, Nb et O. On nomme ce support le support d'essai.

Plus généralement, le support peut être tout type de support dont la forme géométrique est destinée pour une application donnée. Par exemple, une couche mince d'une épaisseur de quelques micromètres peut être utilisée pour inscrire des propriétés optiques d'ordre deux.

Le procédé de l'invention permet d'imprimer des propriétés optiques non-linéaires sur une profondeur allant de quelques nanomètres à au moins une dizaine de micromètres. Le procédé de l'invention s'applique à tout type de support amorphe et tout type de surface. Les propriétés géométriques du support sont conçues pour une application donnée.

Le support peut être avantageusement un élément optique permettant la conversion en fréquence d'un signal optique incident.

### Type d'électrodes

Le procédé de l'invention est mis en oeuvre par une électrode structurée configurée pour générer des accumulations de charges localisées selon un agencement spatial et géométrique prédéfini. Le processus d'accumulation de charges est contrôlé par la nature et la structuration de l'électrode, la durée et l'intensité du champ ou le potentiel électrique appliqué.

Selon différents modes de réalisation, l'électrode 3 peut être structurée de différentes manières. Elle peut être structurée par la présence de confinements (trous), la présence de pointes ou par une structuration comprenant des bords ou par une combinaison de ces différentes géométries. Lorsqu'une tension est appliquée à l'électrode, un champ électrique est produit. La structuration de l'électrode induit une modification du champ électrique produit à sa surface selon la répartition et la géométrie de la structuration de l'électrode. La forme du champ électrique produit résulte des effets produits par l'effet de confinement, l'effet de pointe ou l'effet de bord ou une combinaison de ces effets. Les électrons s'accumulent, par exemple, sur les bords d'une structuration particulière. La structuration d'une électrode à sa surface permet de contrôler une accumulation de charges désirée pour induire des propriétés optiques non-linéaires du second ordre sur le support en matériau amorphe.

L'effet de confinement peut être obtenu par la formation d'au moins un trou localisé à la surface de la zone conductrice de l'électrode. L'effet de pointe peut être obtenu par la formation d'une pointe conductrice à la surface de la zone conductrice de l'électrode.

Selon un mode de réalisation, l'électrode 3 comprend un ensemble de points de confinement et/ou un ensemble de points formant des pointes agencés à la surface de la zone conductrice. L'agencement peut être réalisé de sorte à former une matrice de points ou un motif géométrique donné. Par exemple, une alternance de points de confinement et de pointes peut être définie à la surface de l'électrode 3. Dans ce cas, les espacements entre les points de discontinuité de surface de la zone conductrice de l'électrode sont définis selon une application optique donnée du support amorphe.

Selon un mode de réalisation, l'électrode comprend un matériau conducteur possédant des discontinuités géométriques à sa surface.

Selon un autre mode de réalisation, l'électrode comprend des alternances spatiales de ses propriétés de conduction électrique. Par exemple, l'électrode 3 peut comprendre une alternance géométrique de zones conductrices et de zones non conductrices sur une portion 4 qui est destinée à être appliquée sur le support 1. Afin de réaliser une telle alternance spatiale tout en bénéficiant de l'effet de bord produit, des zones conductrices peuvent être superposées en partie à un substrat isolant.

Ce type de structuration pour la préparation d'une électrode peut être obtenue par des techniques de type lithographie communément utilisées en microélectronique.

La figure 2A représente un exemple de réalisation d'une électrode 3 et une alternance de lignes structurées 4 à la surface de l'anode de l'électrode 3. Selon les modes de réalisation envisagés, l'électrode 3 peut comprendre un bâti pour maintenir l'anode par exemple sur un support. Les lignes sont structurées par superposition de lignes conductrices sur un substrat isolant 31. Pour faciliter la lecture de la figure et la visibilité des lignes, ces dernières sont représentées de manière visible sur la vue de dessus de l'électrode 3. Cette représentation est conservée également sur la figure 2B.

La figure 2C représente l'électrode 3 en vue de coupe dans laquelle on distingue la partie formant la cathode 3c et la partie formant l'anode 3a agencées en regard l'une de l'autre. Dans cet exemple, l'électrode 3 forme une structure sandwich dans laquelle le support 1 peut être maintenu entre l'anode 3a et la cathode 3c.

La figure 6A représente un autre exemple de réalisation d'une électrode 3 comprenant des pointes 33 qui forment la structuration de l'électrode 3. L'électrode 3 peut comprendre dans cet exemple une plaque de silicium dopé formant un élément conducteur.

La figure 6B représente un autre exemple de réalisation d'une électrode 3. Cette dernière comprend une anode 3a prolongée par un élément conducteur de type plaque mince de silicium apposée sur un support 1. L'électrode 3 comprend, dans cet exemple, une cathode 3c sur laquelle repose le support 1. La structuration de l'anode 3a peut être, par exemple, une structuration comprenant des lignes comme représentée à la figure 2A ou une structuration comprenant des pointes comme représentée à la figure 6A. Selon un mode de réalisation, la cathode 3c comprend des moyens pour chauffer le support 1 et le maintenir à une température donnée.

L'électrode 3 comprend donc des motifs 4 définissant une structuration sur une zone destinée à être appliquée sur une surface d'un support en matériau amorphe. Dans le cas de la figure 2A, les zones sont des lignes 4 d'une même largeur. Les motifs peuvent être réalisés par différentes techniques : par la formation de discontinuités d'une zone conductrice ou par une géométrie définie par des alternances de zones conductrices et de zones non conductrices.

Selon un mode de réalisation, l'électrode est dimensionnée pour inscrire sur une surface d'un support des propriétés optiques non-linéaires d'ordre 2 sur une portion donnée. Dans ce cas de figure, l'électrode et sa structuration sont dimensionnées de sorte à couvrir une portion du support.

Un exemple de réalisation d'une électrode de l'invention peut être obtenu par la formation à sa surface d'une couche mince d'oxyde d'indiumétain, plus connu sous la désignation anglo-saxonne « ITO ». Cette couche mince permet d'obtenir de bonnes propriétés de conductivité électrique. Une couche d'une épaisseur de 100nm peut être réalisée à la surface de l'électrode. Selon d'autres variantes de réalisation, l'épaisseur peut être de quelques nanomètres à plusieurs milliers de nanomètres.

La couche mince d'ITO est déposée sur un substrat isolant électriquement. Les motifs formant la structuration de l'électrode peuvent être réalisés par ablation de portions de la couche mince d'ITO laissant apparaître certaines zones de substrat isolant. La structuration est dite obtenue « par ablation » pour définir une géométrie donnée.

Selon un exemple, une alternance de lignes de substrat isolant et de lignes conductrices peut former une géométrie définissant une structuration de l'électrode. On nomme cette électrode l'électrode d'essai.

### Chauffe du support

Le procédé d'inscription comprend une étape de chauffe d'un support amorphe dans une plage de températures permettant le déplacement de charges dans ledit support sous l'effet de l'application d'un champ électrique. Cette étape est notée AUG_TEMP sur la figure 1. Selon un champ d'application de l'invention, la température du support peut être élevée dans une gamme large de 50°C à 500°C selon les applications choisies. La température doit être préférentiellement inférieure à la température de transition vitreuse du support lorsque cette température existe.

Selon un exemple de réalisation, la température du support peut être avantageusement configurée de 100°C à 300°C. La température choisie dépend notamment du matériau, de la géométrie du support et de la densité de cations dans le support.

L'élévation de température permet d'améliorer la mobilité des cations sous l'effet d'un champ électrique que l'on applique par l'intermédiaire d'une électrode.

Une table de configuration, telle qu'un abaque, peut être utilisée pour configurer la température en fonction du support, de sa géométrie et de la densité de cations dans le support. L'élévation de la température permet de chauffer le support à une température souhaitée favorisant la migration des cations dans la matière amorphe sous l'application d'un champ électrique. L'étape d'application d'un champ électrique au moyen d'une électrode structurée est alors réalisée à la température de chauffe qui est maintenue pendant le procédé.

La figure 2B représente un support amorphe 1 sur lequel est maintenue en contact une électrode 3. Des propriétés optiques non-linéaires du second ordre sont inscrites sur le support 1 à partir d'une électrode structurée 3 au moyen du procédé de l'invention. Un thermomètre THER est capable de mesurer la température du support 1 qui est chauffé au moyen d'un composant CHAU. Le composant CHAU peut être configuré de sorte à élever la température du support 1 et de la maintenir à une température de consigne. Une alimentation PSU est représentée pour alimenter l'électrode 3 en tension.

### Application d'un champ électrique

Le procédé d'inscription de l'invention comprend l'application d'une électrode structurée 3 sur un support amorphe pour générer un champ électrique induisant des accumulations de charges localisées. Cette étape est notée APP_CHMP sur la figure 1.

L'électrode 3 peut être appliquée par contact sur le support. Le contact peut être maintenu grâce à une pression mécanique appliquée à l'électrode 3 et au support 1. Dans ce cas de figure, l'électrode 3 est appliquée comme un tampon sur le support pendant une durée prédéfinie. Selon un autre mode de réalisation, elle peut être appliquée à proximité de la surface du support 1. Dans ce dernier cas, l'électrode 3 peut être maintenue à une distance de quelques micromètres du support. Un plasma peut être utilisé pour former une interface de conduction entre l'électrode et le support. Selon d'autres modes de réalisation, une interface conductrice peut être agencée entre l'électrode et le support.

La durée d'application du champ et son intensité sont configurées en fonction :
▪ de la tension appliquée à l'électrode, du type d'électrode, de l'intensité du champ électrique généré et de la structuration de l'électrode et/ou ;
▪ du type de matériau amorphe utilisé, de la densité de cations dans le matériau et/ou ;
▪ de la température appliquée.

Selon un mode de réalisation, une tension appliquée à l'électrode 3 peut être comprise entre 0,5V à 5kV. Selon un mode plus général de l'invention, la tension peut être comprise dans des gammes de valeurs supérieures et inférieures à la gamme 0,5V et 5kV, la puissance et l'ampérage étant adaptés au cas d'application. Notamment, le type d'électrode et la structuration imposent un champ électrique généré qui peut être piloté par une tension appliquée à l'électrode.

Selon un cas d'exemple, lorsque l'électrode est structurée grâce à de fines couches d'ITO par ablation, une tension de 1,5kV à une température de 230°C peut être définie. L'épaisseur de la couche peut être de l'ordre par exemple d'une centaine de nanomètres. On nomme ces conditions d'application en tension et en température, les conditions d'essais.

Dans le cas d'une électrode structurée par une alternance spatiale de zones conductrices et de zones non conductrices, l'accumulation de charges se produit par effet de bord à la surface de l'électrode lors de l'application d'une tension. Les bords sont définis par la jonction des zones non conductrices et des zones conductrices. Dans le cas d'une couche d'ITO couvrant un substrat isolant sur une portion de sa surface, l'effet de bord se produit à la limite des deux zones.

### Inscription, Refroidissement

Lors de l'application de l'électrode sur le support 1, le matériau est polarisé sous l'effet du champ électrique à une température donnée permettant la circulation des cations dans le matériau. Le champ électrique appliqué grâce à l'électrode favorise la création d'une anisotropie qui peut être liée à la présence d'une charge d'espace ou à une réorganisation de la structure ou encore une combinaison de ces deux effets. L'anisotropie induit la création de propriétés optiques non-linéaires du second ordre dans le matériau amorphe. La génération de l'anisotropie dans le matériau est contrôlée grâce à la structuration de l'électrode. L'impression permet en quelque sorte de « figer » la migration des cations sous l'application d'un champ électrique maintenu lors du refroidissement du support.

Le procédé d'inscription est réalisé pendant une durée prédéfinie qui permet la formation d'effets optiques non-linéaires et se termine par le refroidissement du support, par exemple, à une température ambiante. Cette dernière étape est notée DIM_TEMP sur la figure 1. Le refroidissement du support est réalisé sous contrainte, c'est-à-dire en maintenant le champ électrique de l'électrode actif et en maintenant l'électrode en contact du support. Le contact peut être assuré, par exemple, par le maintien d'une pression mécanique entre l'électrode et le support. Le refroidissement sous contrainte permet de bloquer la diffusion des cations et permet la polarisation du support pendant la phase de refroidissement. Ainsi, le refroidissement permet de figer l'effet d'impression du support.

Le refroidissement peut être assuré par une source froide. Selon un exemple de réalisation, la source froide peut être assurée par le composant CHAU fournissant la chaleur.

### Exemple de réalisation, Essai

La figure 2B illustre un cas d'exemple d'un support d'essai, une électrode d'essai dans des conditions d'essai qui ont été préalablement définies.

Le support 1 en verre comprend des lignes 2 qui se sont formées à sa surface après l'application de l'électrode 3 de la figure 2A selon le procédé de l'invention.

Un microscope optique permet de caractériser l'anisotropie obtenue à partir de mesures de la génération de second harmonique, dont le procédé est connu sous l'acronyme GSH. La génération d'un second harmonique est une preuve d'observation qu'une propriété optique non-linéaire du second ordre a été inscrite à la surface du support amorphe 1.

### - Localisation de l'anisotropie

La figure 3A représente un support en matériau amorphe sur lequel des lignes 2 ont été inscrites grâce au procédé de l'invention. Dans ce cas de figure, il a été utilisé une électrode 3 comprenant une autre structuration que l'électrode de la figure 2A qui présente des lignes d'épaisseur constante. Dans le cas de la figure 3A, une électrode structurée avec des lignes de différentes largeurs a été utilisée.

On observe sur la figure 3B des maximas observés de la réponse GSH d'un laser polarisé selon l'axe y en fonction de la largeur des lignes 2 inscrites sur le support 1 de la figure 3A. On constate que les maximas sont présents au bord des lignes. L'effet de bord permet de générer des accumulations de charges localisées et permet d'inscrire spatialement selon des lignes organisées dans le matériau des propriétés optiques non-linéaires.

L'effet de traitement de polarisation est induit sur chaque bord de ligne, la distance entre les deux maximas augmentant avec l'épaisseur des lignes 2 inscrites par l'électrode structurée 3. La figure 3A représente 4 exemples de structuration de lignes ayant pour largeur 1 µm, 3 µm, 7 µm et 9 µm et correspondant aux résultats obtenus de réponse GSH de la figure 3B.

### - Géométrie de l'anisotropie

La figure 4A représente une caractérisation de la géométrie de la réponse de GSH d'un laser polarisé selon l'axe z par la courbe 10 et polarisé selon l'axe y par la courbe 20 lorsqu'une ligne a été inscrite sur un support. Les deux composantes y et z observées sont orthogonales entre elles. Les composantes x et y sont comprises dans le plan de la surface du support en verre, la composante z est orthogonale à la surface du support en verre. La composante y est perpendiculaire à la ligne formée par inscription selon le procédé de l'invention.

On distingue, selon la polarisation z, sur chaque bord de la ligne observée, deux maximas 11, 11' et 12, 12' de la réponse de GSH. Ces deux maximas sont conformes à la représentation tridimensionnelle de la figure 4B. La figure tridimensionnelle de la figure 4B illustre la réponse GSH de la polarisation selon z de la courbe 10 de la figure 4A.

Selon la polarisation y, on distingue un maximum 21 et 22 sur chaque bord de la ligne observée. Aucun signal n'est mesuré dans ce cas d'exemple selon l'axe x. On comprend que les maximas de la réponse de GSH sont obtenus sur chaque bord d'une ligne d'une largeur de 8 à 9 µm et tout le long de ces bords, la mesure est réalisée à partir de l'axe y perpendiculaire à la ligne.

La figure 4B donne une représentation tridimensionnelle d'une réponse de GSH lorsque l'analyse d'une ligne inscrite est effectuée selon la polarisation z. On distingue la formation d'une anisotropie qui caractérise la géométrie des propriétés optiques inscrites dans le verre. L'anisotropie 10 selon la polarisation z est formée perpendiculaire à la surface du verre. Dans cet exemple de réalisation, la réponse optique non-linéaire d'ordre deux possède deux maximums localisés sur chaque bord de la ligne analysée selon cet axe-là. Selon l'axe y, on distingue que les courbes s'étendent légèrement selon l'axe y.

Selon la polarisation des signaux émis par le microscope optique, il est possible de visualiser sur chaque axe la génération de la seconde harmonique. Dans le cas d'exemple de la figure 4A, il n'y a aucune génération de seconde harmonique selon l'axe x ou celle-ci est considérée comme négligeable.

### - Homogénéité de l'anisotropie

Le procédé de l'invention permet donc de contrôler l'anisotropie créée grâce à l'électrode structurée 3. Un avantage est de permettre le contrôle de la localisation et de la géométrie de l'anisotropie mais également de son homogénéité. On entend par « homogénéité de l'anisotropie » le niveau obtenu de la réponse GSH selon l'axe observé lorsqu'il est compris dans un intervalle de valeurs donné. L'homogénéité se caractérise donc par une quantification de la réponse GSH dans un intervalle de valeurs donné. Sur la figure 4B, on constate que les niveaux des maximas sont sensiblement constants dans la direction de l'anisotropie. On parle alors d'anisotropie homogène.

Le procédé de l'invention assure une répartition sensiblement homogène des propriétés optiques non-linéaires selon une direction. Cela peut être le cas sur deux dimensions, voire trois dimensions selon la géométrie de l'anisotropie qui a été inscrite dans le matériau amorphe.

Un avantage est de configurer la structuration de l'électrode pour obtenir une quantification souhaitée de réponse GSH selon chacun des axes permettant de définir des propriétés optiques non-linéaires d'ordre deux homogènes selon un axe donné de l'anisotropie.

### - Périodicité de l'anisotropie

La figure 5A représente un exemple de support 1 de plusieurs millimètres carrés, dans cet exemple : sur une surface de 4mm², sur lequel une pluralité de lignes d'une largeur de quelques micromètres ont été inscrites à partir d'une électrode structurée 3. Selon un exemple, la structuration est formée par un ensemble de lignes de 2µm de large et de 2mm de long. La structuration est dite micrométrique. Dans ce cas d'exemple, la structuration périodique à l'échelle micrométrique de l'électrode 3 permet d'inscrire à cette même échelle des propriétés optiques non-linéaires du second ordre sur un support amorphe.

La figure 5B donne une représentation tridimensionnelle d'une réponse de GSH lorsque l'analyse est effectuée selon la polarisation z d'une pluralité de lignes inscrites de même largeur et toutes sensiblement parallèles. On distingue la formation d'une répétition périodique de l'anisotropie qui caractérise la géométrie des propriétés optiques inscrites dans le verre. Dans cet exemple, la géométrie des anisotropies peut être obtenue selon l'axe y et l'axe z comme le cas de la figure 4A.

Cet exemple permet d'illustrer un cas intéressant de propriétés optiques organisées à la surface d'un support pour répondre à une application donnée comme un convertisseur en fréquences.

Selon un autre essai, on considère un carré d'ITO de 50 µm de côté sur un substrat isolant. Le signal GSH induit et mesuré avec une polarisation du laser linéaire selon l'axe y d'un microscope optique est observable sur le bord de la structuration, c'est-à-dire à la limite entre le substrat isolant et la zone conductrice. On observe lorsqu'une tension est appliquée à l'électrode que l'accumulation de charges se produit sur le bord avec une polarisation de mesure suivant l'axe x.

Ce second essai démontre que le contrôle de la polarisation peut être effectué par le contrôle de l'accumulation de charges en certaines zones et selon certaines géométries. Il est alors possible grâce au procédé de l'invention de contrôler la localisation et l'orientation de l'anisotropie induite à la surface d'un support amorphe.

Le procédé de l'invention permet donc un traitement de type impression sous contrainte thermique et électrique.

L'impression permet de contrôler spatialement et géométriquement selon les trois axes une anisotropie induite qui gouverne les propriétés optiques non-linéaires du second ordre d'un support imprimé.

Avantageusement, une électrode de l'invention est conçue spécialement pour l'impression d'un support amorphe. Les choix de conception reposent notamment sur une capacité à fonctionner dans des gammes de températures allant jusqu'à 300°C, voire plus. Par ailleurs, l'électrode 3 est conçue pour éviter de causer tout dommage au support amorphe 1 notamment par la pression mécanique exercée ainsi que par sa géométrie. La nature chimique de l'électrode 3 peut également être conçue pour éviter de provoquer une réaction électrochimique entre l'électrode et le support. On privilégie alors une configuration dans laquelle une neutralité chimique entre l'électrode et le matériaux est choisie.

### Applications

L'invention présente un intérêt et de nombreux avantages dans le domaine de la micro photonique pour la réalisation, par exemple, de composants électro-optiques ou de convertisseurs de longueur d'onde. Ce type d'application requiert le plus souvent une condition d'accord de phase ou de quasi accord de phase des ondes interférentes dans le milieu. Pour répondre à cette condition, la structuration spatiale inscrite dans le milieu doit être d'un ordre de grandeur de l'ordre du micromètre. Le procédé de l'invention permet d'obtenir une telle précision dans les propriétés optiques non-linéaires inscrites dans le matériau et répond donc parfaitement à cette exigence.

Pour un convertisseur de fréquences, la distance interligne des motifs à inscrire sur un support amorphe est configurée sur l'électrode structurée 3 en fonction d'une longueur d'onde donnée et d'un indice de matériau. Le matériau amorphe peut donc être imprimé pour permettre un quasi accord de phase lors de la conversion en fréquence lorsqu'il est conçu pour convertir en fréquences un signal optique incident.

Différents types de motifs peuvent être inscrits sur un matériau amorphe à partir du procédé de l'invention, tels que courbes, des lignes, ou n'importe quel motif dont au moins une dimension est d'ordre micrométrique allant par exemple de 0,1 µm à 100 µm.

Un avantage d'inscrire des propriétés optiques non-linéaires dans des matériaux amorphes est de diminuer les coûts. Par ailleurs, les matériaux amorphes offrent une meilleure compatibilité optique avec les fibres optiques par exemple.

Un avantage de l'invention est de disposer d'une électrode totalement réutilisable car aucun transfert ionique n'est effectué sur le support. Elle conserve donc sa structuration après l'application du procédé de l'invention. Un avantage vis-à-vis de solutions dans laquelle il y a un transfert ionique, tel qu'un transfert d'une couche d'argent structurée sur un support, est que la structuration de l'électrode reste conservée après son usage. Un avantage est de permettre une réutilisation pour inscrire d'autres propriétés optiques sur d'autres supports.

En effet, certaines solutions de l'art antérieur permettent d'inscrire des propriétés optiques non linéaires par transfert d'une couche structurée, dans ce cas c'est la couche ionisée qui est structurée. Après le procédé d'inscription de telles solutions, l'électrode ne possède plus de structuration et ne peut donc pas être réutilisée. Ce qui présente un inconvénient.

Enfin, certaines solutions de l'art antérieur permettent d'inscrire des propriétés optiques non linéaires sur des matériau organique polymère comportant des molécules d'intérêt pour l'optique non linéaire.

Dans ce cas, pour un matériau organique le champ électrique amène une orientation moléculaire. Les molécules d'intérêt pour l'optique non linéaire peuvent être considérées comme des dipôles qui s'alignent sous l'effet du champ électrique et amène l'anisotropie nécessaire.

En revanche, selon le procédé de l'invention qui s'applique à un matériau amorphe tel qu'un verre, le traitement de polarisation induit une charge d'espace au sein du matériau. Cette charge d'espace est à l'origine d'un champ électrique statique permanent dans la matrice vitreuse, l'anisotropie et les propriétés optiques non linéaires crées sont alors de nature électro-optique.

Un avantage de l'invention vis-à-vis de l'inscription sur une matière organique de type polymère est que les gammes de tensions utilisées de l'invention sont beaucoup plus élevées que le seuil d'endommagement de celui d'un support en matériau organique pour un traitement de polarisation en contact, notamment d'un matériau organique polymère.

Selon un mode de réalisation, la tension est définie de sorte à générer un champ électrique compris dans la gamme [0.7 kV/mm ; 5 kV/mm].

## Revendications

1. Procédé d'inscription de propriétés optiques non-linéaires du second ordre sur un support comprenant un matériau amorphe inorganique, ledit matériau amorphe inorganique comprenant des cations, ledit procédé étant **caractérisé en ce qu'**il comprend :
▪ Un chauffage du support dans une plage de température permettant le déplacement des cations dans ledit support ;
▪ Une application d'une électrode structurée, au contact dudit support, ladite électrode structurée comprenant une couche mince conductrice sur un substrat isolant, ladite couche mince conductrice comportant au moins une discontinuité géométrique, ladite électrode structurée générant un champ électrique configuré pour induire une accumulation d'électrons localisée, par chaque discontinuité, en au moins une première zone de la surface de ladite électrode structurée lorsqu'elle est alimentée par une tension, ladite accumulation des électrons localisée générant, par effet de bord ou effet de pointe couplé aux cations dudit support, au moins une anisotropie, comprenant une modification de la densité des cations du support et/ou une réorganisation de la structure moléculaire du support, structurant une seconde zone du support sous la forme de propriétés optiques non-linéaires inscrites à la surface dudit support ;
▪ Un refroidissement du support sous l'application du champ électrique généré maintenu pendant une durée prédéterminée par l'application de l'électrode.

2. Procédé selon la revendication précédente, **caractérisé en ce qu'**une anisotropie formée dans le support comprend une géométrie et une localisation contrôlée dans la seconde zone du support.

3. Procédé selon la revendication précédente, **caractérisé en ce qu'**une anisotropie formée dans le support est homogène selon au moins une direction de la seconde zone du support.

4. Procédé selon l'une quelconque des revendications précédentes, **caractérisé en ce que** la structuration de l'électrode est configurée pour créer une anisotrope induisant une répartition localisée de propriétés optiques non-linéaires du second ordre dans la seconde zone du support.

5. Procédé selon l'une quelconque des revendications précédentes, **caractérisé en ce que** l'électrode comprend un matériau conducteur électriquement comportant au moins une discontinuité géométrique.

6. Électrode structurée pour l'inscription de propriétés optiques non-linéaires du second ordre d'un matériau amorphe inorganique comprenant une couche mince conductrice sur un substrat isolant, ladite couche mince conductrice comportant au moins une zone conductrice comportant des propriétés géométriques formant un agencement de discontinuités géométriques à sa surface permettant, lors de son alimentation, de générer une accumulation de charges électriques localisées par chaque discontinuité géométrique de manière à produire un effet de bord ou effet de pointe.

7. Électrode structurée selon la revendication précédente, **caractérisée en ce que** ladite électrode comprend une structuration périodique de motifs conducteurs, chaque motif conducteur formant une zone conductrice.

8. Électrode structurée selon la revendication précédente, **caractérisée en ce que** les motifs conducteurs sont espacés d'au moins une dimension prédéfinie.

9. Électrode structurée selon l'une quelconque des trois revendications précédentes, **caractérisée en ce que** les propriétés géométriques forment un agencement de discontinuités géométriques comprenant des trous et des pointes localisés.

10. Électrode structurée selon l'une quelconque des quatre revendications précédentes, **caractérisée en ce qu'**elle comprend des alternances spatiales de zones conductrices et non conductrices formant les propriétés géométriques.

## Patentansprüche

1. Verfahren zum Schreiben nichtlinearer optischer Eigenschaften zweiter Ordnung auf einen Träger, der ein anorganisches amorphes Material umfasst, welches Kationen umfasst, wobei das Verfahren **dadurch gekennzeichnet ist, dass** es umfasst:
(i) Ein Erhitzen des Trägers auf einen Temperaturbereich, der die Bewegung der Kationen im Träger ermöglicht;
(ii) Eine Anwendung einer strukturierten Elektrode in Kontakt mit dem Träger, wobei die strukturierte Elektrode eine leitende Dünnschicht auf einem isolierenden Substrat umfasst und die leitende Dünnschicht mindestens eine geometrische Diskontinuität aufweist, wobei die strukturierte Elektrode ein elektrisches Feld erzeugt, das so gestaltet ist, dass es eine lokalisierte Elektronenakkumulation durch jede Diskontinuität in mindestens einem ersten Bereich der Oberfläche der strukturierten Elektrode induziert, wenn sie mit einer Spannung versorgt wird, wobei die lokalisierte Elektronenakkumulation durch einen an die Kationen des Trägers gekoppelten Kanten- oder Spitzeneffekt mindestens eine Anisotropie erzeugt, die eine Änderung der Kationendichte des Trägers und/oder eine Reorganisation der Molekularstruktur des Trägers umfasst, die einen zweiten Bereich des Trägers in Form von nichtlinearen optischen Eigenschaften strukturiert, die in der Oberfläche des Trägers geschrieben sind;
(iii) Eine Kühlung des Trägers unter der Anwendung des erzeugten elektrischen Feldes, das für eine vorbestimmte Zeit durch die Anwendung der Elektrode aufrechterhalten wird.

2. Verfahren nach dem vorhergehenden Anspruch, **dadurch gekennzeichnet, dass** eine in dem Träger gebildete Anisotropie eine kontrollierte Geometrie und Lokalisierung in dem zweiten Bereich des Trägers umfasst.

3. Verfahren nach dem vorhergehenden Anspruch, **dadurch gekennzeichnet, dass** eine in dem Träger gebildete Anisotropie in mindestens einer Richtung des zweiten Bereichs des Trägers homogen ist.

4. Verfahren nach einem der vorhergehenden Ansprüche, **dadurch gekennzeichnet, dass** die Strukturierung der Elektrode so gestaltet ist, dass sie eine Anisotropie erzeugt, die eine lokalisierte Verteilung von nichtlinearen optischen Eigenschaften zweiter Ordnung im zweiten Bereich des Trägers induziert.

5. Verfahren nach einem der vorhergehenden Ansprüche, **dadurch gekennzeichnet, dass** die Elektrode ein elektrisch leitendes Material mit mindestens einer geometrischen Diskontinuität umfasst.

6. Strukturierte Elektrode zum Schreiben nichtlinearer optischer Eigenschaften zweiter Ordnung eines anorganischen amorphen Materials, die eine leitende Dünnschicht auf einem isolierenden Substrat umfasst, wobei die leitende Dünnschicht mindestens einen leitenden Bereich mit geometrischen Eigenschaften aufweist, die eine Anordnung geometrischer Diskontinuitäten an ihrer Oberfläche bilden, die es bei ihrer Stromversorgung ermöglichen, eine Anhäufung elektrischer Ladungen zu erzeugen, die durch jede geometrische Diskontinuität lokalisiert werden, um einen Kanteneffekt oder Spitzeneffekt zu erzeugen.

7. Strukturierte Elektrode nach dem vorhergehenden Anspruch, **dadurch gekennzeichnet, dass** die Elektrode eine periodische Strukturierung von leitfähigen Mustern umfasst, wobei jedes leitfähige Muster einen leitfähigen Bereich bildet.

8. Strukturierte Elektrode nach dem vorhergehenden Anspruch, **dadurch gekennzeichnet, dass** die leitfähigen Muster um mindestens ein vordefiniertes Maß voneinander beabstandet sind.

9. Strukturierte Elektrode nach einem der drei vorhergehenden Ansprüche, **dadurch gekennzeichnet, dass** die geometrischen Eigenschaften eine Anordnung von geometrischen Diskontinuitäten bilden, die lokalisierte Löcher und Spitzen umfassen.

10. Strukturierte Elektrode nach einem der vier vorhergehenden Ansprüche, **dadurch gekennzeichnet, dass** sie räumliche Wechsel von leitenden und nichtleitenden Bereichen umfasst, die die geometrischen Eigenschaften bilden.

## Claims

1. Method for the inscription of second order non-linear optical properties on a support comprising an inorganic amorphous material, said inorganic amorphous material comprising cations, said method being **characterised in that** it comprises:
▪ Heating the support within a temperature range allowing the movement of cations inside said support;
▪ Applying a structured electrode, in contact to said support, said structured electrode comprising a thin conductive film on an insulating substrate, said structured electrode comprising at least one geometric discontinuity, said thin conductive film generating an electrical field designed to induce a localised accumulation of electrons, by each discontinuity, in at least one first zone of the surface of said structured electrode when it is supplied by a voltage, said localised accumulation of electrons generating, by edge effect or peak effect coupled with cations of said support, at least one anisotropy, comprising a modification of the cations density of said support and/or a reorganisation of the molecular structure of said support, structuring a second zone of the support in the form of non-linear optical properties inscribed on the surface of said support;
▪ Cooling the support under the application of the electrical field generated and maintained for a predetermined duration by the application of the electrode.

2. Method according to the preceding claim, **characterised in that** an anisotropy formed in the support comprises a controlled geometry and localisation in the second zone of the support.

3. Method according to the preceding claim, **characterised in that** an anisotropy formed in the support is homogeneous along at least one direction of the second zone of the support.

4. Method according to any of the preceding claims, **characterised in that** the structuring of the electrode is designed to create an anisotropy inducing a localised distribution of second order non-linear optical properties in the second zone of the support.

5. Method according to any of the preceding claims, **characterised in that** the electrode comprises an electrically conducting material comprising at least one geometric discontinuity.

6. Structured electrode for the inscription of second order non-linear optical properties on an inorganic amorphous material comprising a thin conductive layer on an insulating substrate, said thin conductive layer comprising at least one conductive zone having geometric properties forming an arrangement of geometric discontinuities at its surface enabling, when it is supplied, the generation of an accumulation of electrical charges localized by each geometric discontinuity so as to produce an edge effect or peak effect.

7. Structured electrode according to the preceding claim, **characterised in that** said electrode comprises a periodic structuring of conductive patterns, each conductive pattern forming a conductive zone.

8. Structured electrode according to the preceding claim, **characterised in that** the conductive patterns are spaced apart by at least one predefined dimension.

9. Structured electrode according to any of the three preceding claims, **characterised in that** the geometrical properties form an arrangement of geometrical discontinuities comprising localized holes and peaks.

10. Structured electrode according to any of the four preceding claims, **characterised in that** it comprises spatial alternations of conductive and nonconductive zones forming the geometrical properties.
